# EUROPEAN PATENT SPECIFICATION

(11) **EP 1 625 741 B1**
(45) Date of publication and mention of the grant of the patent: **16.03.2011**
(21) Application number: 04734417.1
(22) Date of filing: 21.05.2004
(51) Int. Cl.: H04N 1/00, H04N 1/387

(54) **DATA COMMUNICATIONS DEVICE, IMAGE TRANSMISSION METHOD AND IMAGE TRANSMISSION PROGRAM**
DATENÜBERTRAGUNGSVORRICHTUNG, BILDÜBERTRAGUNGSVERFAHREN UND BILDÜBERTRAGUNGSPROGRAMM
DISPOSITIF DE COMMUNICATION DE DONNEES, PROCEDE DE TRANSMISSION D'IMAGES ET PROGRAMME DE TRANSMISSION D'IMAGES

(30) Priority: 22.05.2003 JP 2003144563; 02.04.2004 JP 2004110414
(43) Date of publication of application: 15.02.2006
(73) Proprietor: CASIO COMPUTER CO., LTD., Tokyo 151-0071 (JP)
(72) Inventor: KOYAMA, Hirohisa, Tokyo 190-0022 (JP); GOTO, Yoshihiro, Hamura-shi, Tokyo 205-0001 (JP)
(74) Representative: Grünecker, Kinkeldey, Stockmair & Schwanhäusser Anwaltssozietät
(86) International application number: PCT/JP2004/007399
(87) International publication number: WO 2005/006733

(56) References cited:
- EP-A- 0 395 402
- WO-A-01/67267
- US-A- 5 794 104
- US-A- 5 805 132
- US-A1- 2003 011 704
- US-A1- 2003 083 098

## Description

This application is based upon and claims the benefit of priority from the prior Japanese Patent Application No. 2003-144563, filed May 22, 2003 and 2004-110414, filed April 02, 2004, the entire contents of which is incorporate herein by reference.

The present invention relates to a data communications device, an image transmission method and an image transmission program.

Conventionally, mobile terminals, such as cellular phones, comprise a camera having an image pick-up function, and comprise a function that stores image, which is picked-up by the camera, and transmits the image by attaching it to E-mail.

EP-A3-0 395 402, for instance, describes an image processing system that enables a user to select and transmit images. In addition, EP-A-1 301036 and US-A-5 806 005 describe mobile communication devices that can transmit captured images. An example of a camera without transmission capabilities can be found in US 2002/1015098.

Incidentally, in recent years, the above-mentioned mobile terminal, such as cellular phones, comprising the camera having the functions of VGA photography and megapixel photography are becoming popular. In such mobile terminals, the picked-up image has a plurality of resolutions such as 640x480 dots (VGA), 800x600 dots, 1024x768 dots (SVGA, XGA). In the conventional mobile terminal, there are some problems that the traffic load will increase, the convenience will be worse for taking the longer transfer time. Furthermore the transfer data charge will be increase, because the E-mail volume increases when the E-mail that the high resolution image data is attached to the E-mail is transmitted, compared with a case of that the image data has normal resolution, such as the order of 120x160 dots, is transmitted.

The present invention has been made in view of the circumstances mentioned above. Accordingly, the purpose of the present invention is to provide a data communications device, an image transmission method and an image transmission program which can transmit image data even if the image data has high resolution, preventing an increase in the traffic load, the transfer time and the charge.

This is achieved by the features of the independent claims.

The above and further objects and novel features of the present invention will more fully appear from the following detailed description when the same is read in conjunction with the accompanying drawings. It is to be expressly understood, however, that the drawings are for the purpose of illustration only and are not intended as a definition of the limits of the invention.
FIG. 1 is a block diagram showing a constitution of a cellular phone with camera according to a first embodiment of the present invention,
FIG. 2A is a mimetic diagram showing a appearance, a front view, of the cellular phone in a open condition,
FIG. 3A is a conceptual diagram showing a constitution of memory area of ROM of the cellular phone,
FIG. 3B is a conceptual diagram showing a constitution of memory area of RAM of the cellular phone,
FIG. 4 is a flowchart for explaining an operation of the cellular phone according to the first embodiment,
FIG. 5 is a flowchart for explaining the operation of the cellular phone according to the first embodiment,
FIG. 6 is a flowchart for explaining the operation of the cellular phone according to the first embodiment,
FIG. 7 is a flowchart for explaining the operation of the cellular phone according to the first embodiment,
FIG. 8 is a mimetic diagram showing an example of a display screen of the cellular phone according to the first embodiment,
FIG. 9 is a mimetic diagram showing an example of the display screen of the cellular phone according to the first embodiment,
FIG. 10 is a mimetic diagram showing an example of the display screen of the cellular phone according to the first embodiment,
FIG. 11 is a mimetic diagram showing an example of the display screen of the cellular phone according to the first embodiment,
FIG. 12 is a mimetic diagram showing an example of the display screen of the cellular phone according to the first embodiment,
FIG. 13 is a mimetic diagram showing an example of the display screen of the cellular phone according to the first embodiment,
FIG. 14A is a mimetic diagram showing an example of the display screen of the cellular phone according to the first embodiment,
FIG. 14B is a mimetic diagram showing an example of the display screen of the cellular phone according to the first embodiment,
FIG. 15 is a mimetic diagram showing an example of the display screen of the cellular phone according to the first embodiment,
FIG. 16 is a flowchart for explaining an operation (a part) of the cellular phone according to a second embodiment of the present invention,
FIG. 17 a mimetic diagram showing an example of the display screen of the cellular phone according to the second embodiment,
FIG. 18 a mimetic diagram showing an example of the display screen of the cellular phone according to the second embodiment,
FIG. 19 a mimetic diagram showing an example of the display screen of the cellular phone according to the second embodiment,
FIG. 20 a mimetic diagram showing an example of the display screen of the cellular phone according to the second embodiment,
FIG. 21 is a flowchart for explaining an operation of the cellular phone according to a third embodiment of the present invention,

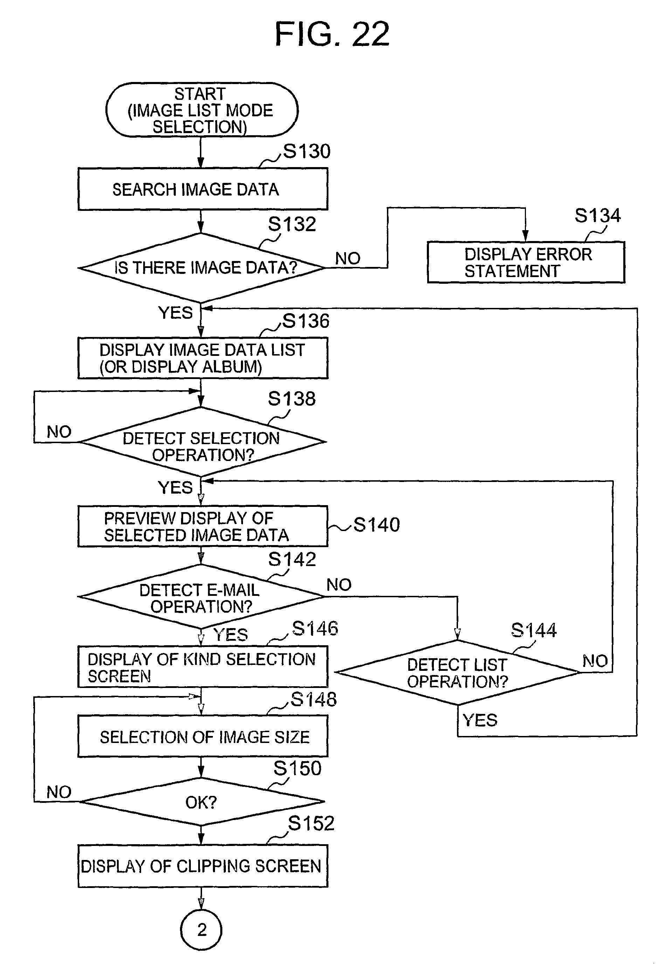

FIG. 22 is a flowchart for explaining the operation of the cellular phone according to a third embodiment of the present invention,
FIG. 23 is a mimetic diagram showing an example of the display screen of the cellular phone according to the third embodiment,
FIG. 24 is a mimetic diagram showing an example of the display screen of the cellular phone according to the third embodiment,
FIG. 25 is a mimetic diagram showing an example of the display screen of the cellular phone according to the third embodiment,
FIG. 26 is a mimetic diagram showing an example of the display screen of the cellular phone according to the third embodiment,
FIG. 27 is a flowchart for explaining an operation of the cellular phone according to a forth embodiment of the present invention,
FIG. 28 is a mimetic diagram showing an example of the display screen of the cellular phone according to the forth embodiment,
FIG. 29 is a mimetic diagram showing an example of the display screen of the cellular phone according to the forth embodiment,
FIG. 30 is a mimetic diagram showing an example of the display screen of the cellular phone according to the forth embodiment,
FIG. 31 is a mimetic diagram showing an example of the display screen of the cellular phone according to the forth embodiment,
FIG. 32 is a mimetic diagram showing an example of the display screen of the cellular phone according to the forth embodiment,
FIG. 33 is a mimetic diagram showing an example of the display screen of the cellular phone according to the forth embodiment,
FIG. 34 is a mimetic diagram showing an example of the display screen of the cellular phone according to the forth embodiment.

The present invention will hereinafter be described in detail with reference to the preferred embodiments applied to a cellular phone with a camera device shown in the accompanying drawings.

### A. First embodiment

### A-1 Composition of the first embodiment

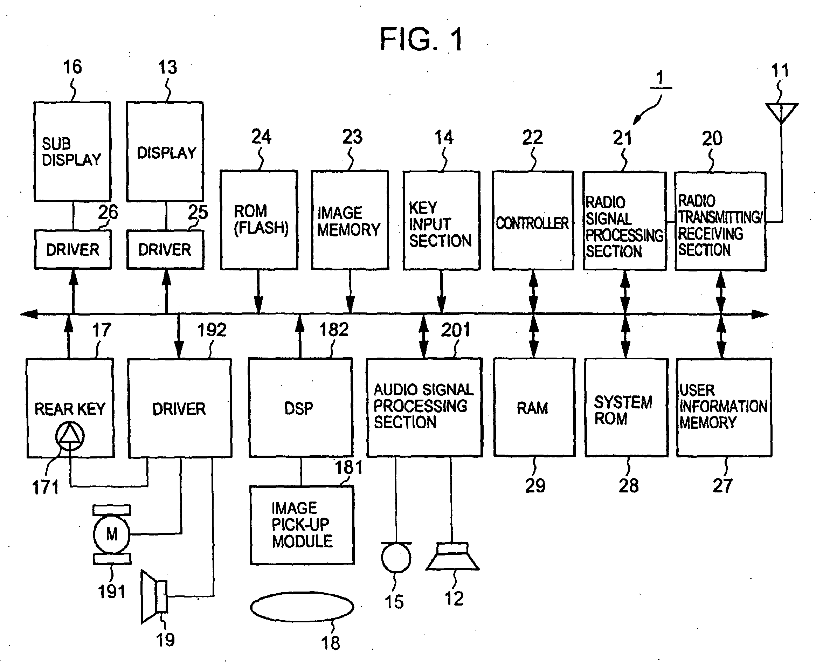

FIG. 1 is a block diagram showing constitution of a cellular phone with camera according to the first embodiment of this invention. In FIG. 1, a radio transmitting/receiving section 20 transmits and receives voice signals and data (E-mail data) with radio wave through an antenna 11, and modulates and demodulates the voice signal and data. A radio signal processing section 21 demodulates the voice signal and data (E-mail data) received on the radio transmitting/receiving section 20, and carries out processing to be necessary for radio communication, to modulate the voice signal and data for transmitting to the radio transmitting/receiving section 20. A controller 22 controls various operations and whole operation.

An image memory 23 is a memory to store image files which are coded and compressed with programs stored into an image processing program area 2413 (later description) after picked-up by an image pick-up section (image pick-up lens 18, an image pick-up module 181 and a DSP 182) and image files which are downloaded through a WWW 5. A ROM 24 consists of a rewritable Flash ROM, and stores later various programs which is a feature of the invention.

A driver 25 comprises a buffer corresponding to a display area of a display 13, and drives display 13. A driver 26 drives a sub-display 16. A user information memory 27 stores telephone numbers to call this cellular phone 1 and profile data such as ID of operator (user). A ROM 28 stores various programs to the control controller 18. A RAM 29 memorizes necessary various data as a radio communication terminal and stores necessary data when the controller 25 acts, and also E-mail data. In the first embodiment, in particular, a memory area exists in the RAM 29 for buffering image data once during pick-up in a pick-up mode. An audio signal processing section 201 encodes the voice signal inputted from the microphone 15, and decodes the voice data on the basis of a signal outputted from the radio signal processing section 21 and then outputs voice by driving the speaker 12. An image pick-up module 181 equips with progressive CCD of 1240000 pixels of 1/2.7 inches, and takes in color images. A DSP 182 encodes the image taken in with the image pick-up module 181, and encodes and compresses the image into JPEG format in this embodiment. A notice device 192 is a driver to drive a notice speaker 19, a vibrator 191 and a LED 171.

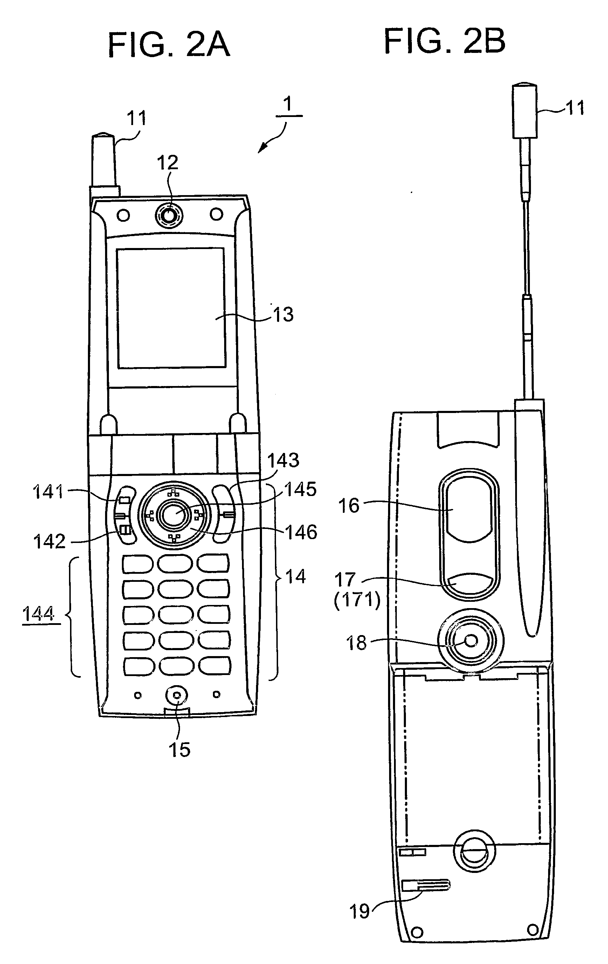

FIGs. 2A and 2B are external views (in open state: front view and rear view) of the cellular phone 1. The cellular phone 1 in the first embodiment is folio structure comprising a cover and a main body. The antenna 11 is mounted on the back of the cover, and is telescopic. A speaker 12 is mounted on the front of the cover, and outputs voice. The display (main display) 13 is a liquid crystal device comprising full color display of 240 dots (width) x 320 dots (height). The display 13 comprises the resolution of QVGA class which can display the photograph and the text of E-mail with photograph at the same time.

The key input section 14 is mounted the front of the main body, and consists from various function key (a E-mail key 141, an address key 142 and a function key 143), a ten key 144, a determination key 145, a cursor key 146 and so on. The E-mail key 141 is for displaying a E-mail menu, activating a E-mail function. The address key 142 is for opening an address book which is used to select E-mail address of an addressee. The function key 143 is for directing such as the creation of E-mail with an image, or the confirmation of E-mail with an image, or the preview playback of an image. The ten key 144 is used when the telephone number and characters are inputted. The determination key 145 is used to take into the image when the pressing remain of this key during predetermined time (about two second) is detected in the pick-up mode. The cursor key 146 is for moving clipping frame 200 (or image) to clip the predetermined size from the picked-up image.

The microphone 15 is mounted below the main body, and inputs the voice. The sub-display 16 is mounted on the back of the cover. A rear key 17 consists of a transparence or a semitransparent member. The LED 171 to emit light is built in the rear key 17. The pick-up lens 18 is provided below of the sub-display 16 and the rear face of the cover 2. The speaker 19 is to notice the receiving of calling or E-mail, and is arranged on the rear face to hear the notice sound even if the cover is closed to the main bod.

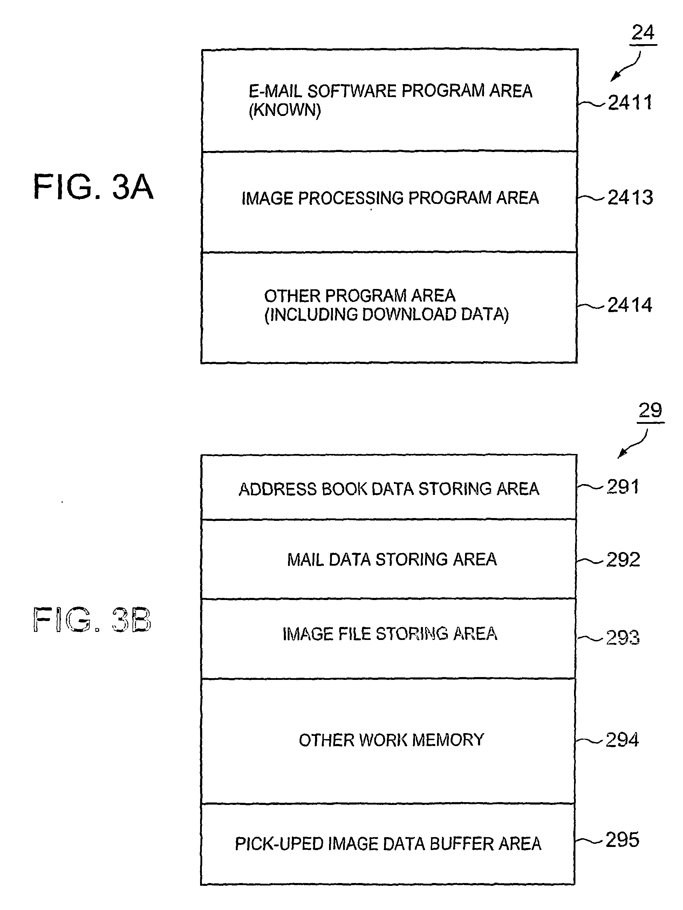

Next, FIG. 3A is a conceptual diagram showing a constitution of memory area of the ROM 24 in the cellular phone 1. The ROM 24 stores software programs which are characteristics of the first embodiment. The ROM 24 consists of an E-mail software program area 2411, an image processing program area 2413 and other program area 2414.

The E-mail software program area 2411 stores a known E-mail software program. The image processing program area 2413 stores an image processing program for clipping the predetermined size to move the clipping frame 200 (or image) from the image, which is buffered into the RAM 29 and is coded with digital data after picked-up by the pick-up section (the pick-up lens 18, the image pick-up module 181 and the DSP 182). In addition, the image processing program may be downloaded from a server through the network such as the internet. Other program area 2414 stores application programs except the above.

Next, FIG. 3B is a conceptual diagram showing a constitution of memory area of the RAM 29 in the cellular phone 1. The RAM 29 consists of an address book data storing area 291, an E-mail data storing area 292, an image file storing area 293, other work memory 294 and a picked-up image data buffer area 295. The address book data storing area 291 stores a plurality of records as one set of records in a name of user, a phone number and an E-mail address. The E-mail data storing area 292 stores E-mail data made by using the E-mail software and received E-mail data. The image file storing area 293 stores a file when the file is attached to the received E-mail. Other work memory 294 stores various data as other work memory. The picked-up image data buffer area 295 is a memory area for buffering an image once during photographing.

### A-2. Operation of the first embodiment

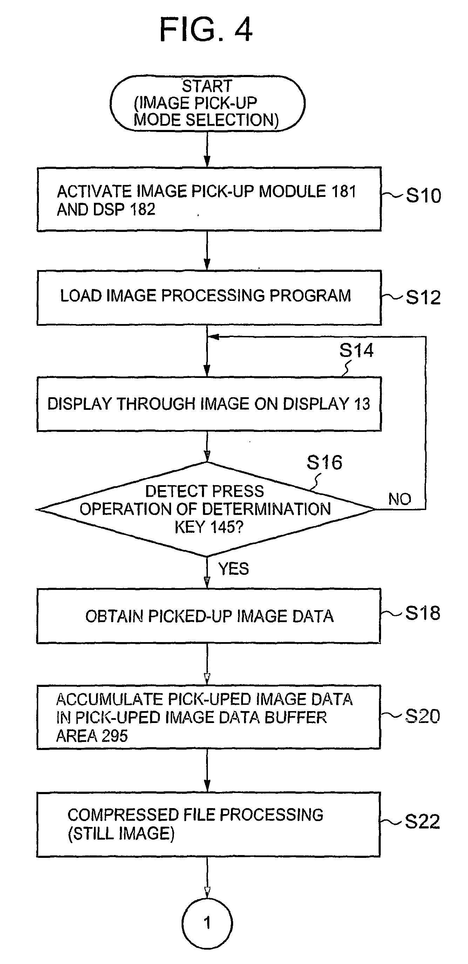

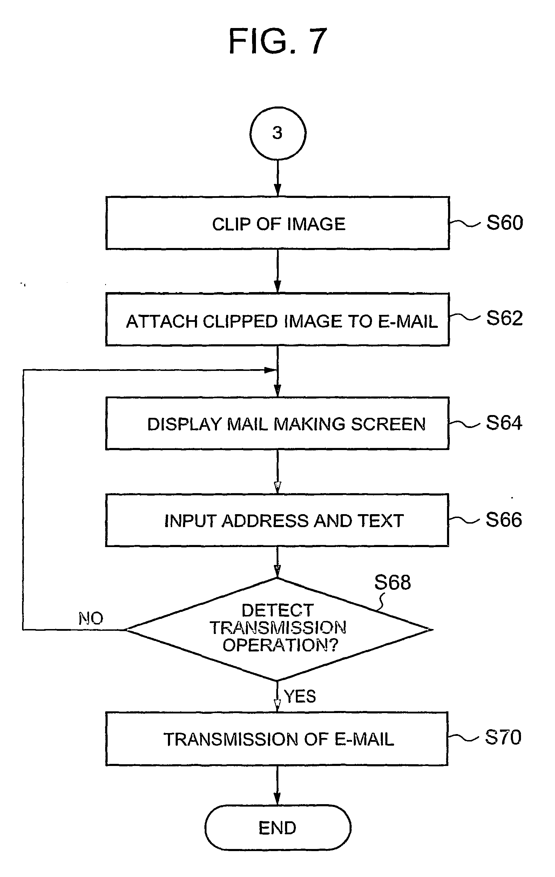

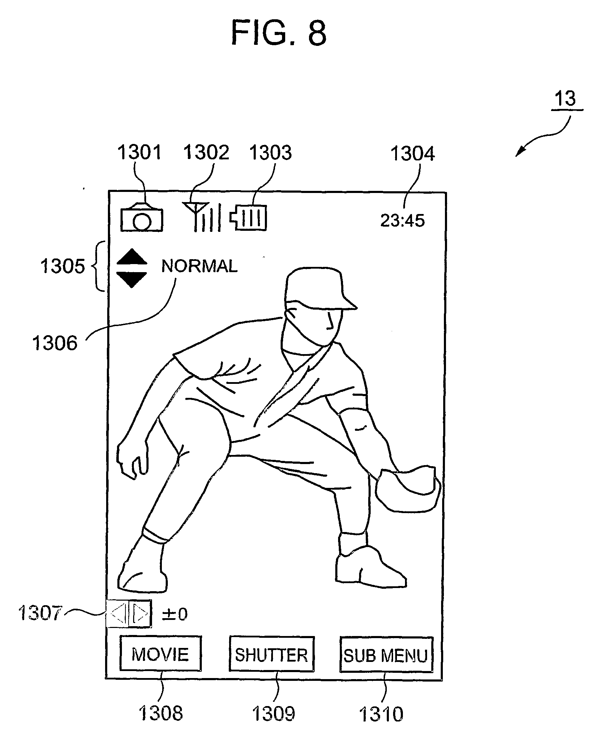

Nest, the operation of the cellular phone according to the first embodiment will be described. FIGs. 4 to 7 are flow charts for explaining the operation of the cellular phone according to the first embodiment. In addition, FIGs. 8 to 15 are conceptual diagrams showing the display screen examples of the cellular phone according to the first embodiment.

First, the image pick-up module 181 and the DSP 182 are activated (Step S10). Next, the image processing program is loaded (Step S12), and the through image is displayed on the display 13 as shown in FIG. 8 (Step S14). Next, the operation judges whether the determination key 145 is pressed (Step S16). When the determination key 145 is not pressed, the operation returns to Step S14, and continues the display of the through image.

As shown in FIG. 8, in the display screen of the through image, a camera mode icon 1301 indicating that it is a camera mode, a receiving condition display icon 1302, a battery residual display icon 1303, a current time display 1304, a zoom icon (to control enlarging/reduction of a view angle to be picked-up, in accordance with the operation detection of up and down directions of the cursor key 146) 1305, a zoom ratio icon (by an example of illustration, be "standards" making neither enlargement nor reduction) 1306, an exposure compensation icon (to control the exposure of the image to be picked-up in correspondence with the operation detection of right and left directions of the cursor key 146) 1307, a mode switch icon (to switch a camera mode and a movie (image pick-up) mode whenever detect the operation of the E-mail key 141) 1308, a shutter icon (to transfer and temporary store the picked-up image to the picked-up image data buffer area 295 of the RAM 29, in correspondence with the operation detection of the determination key 145) 1309, and a sub menu icon (to switch to the display of the pick-up mode menu in correspondence with the operation detection of the function key 143) 1310 are displayed.

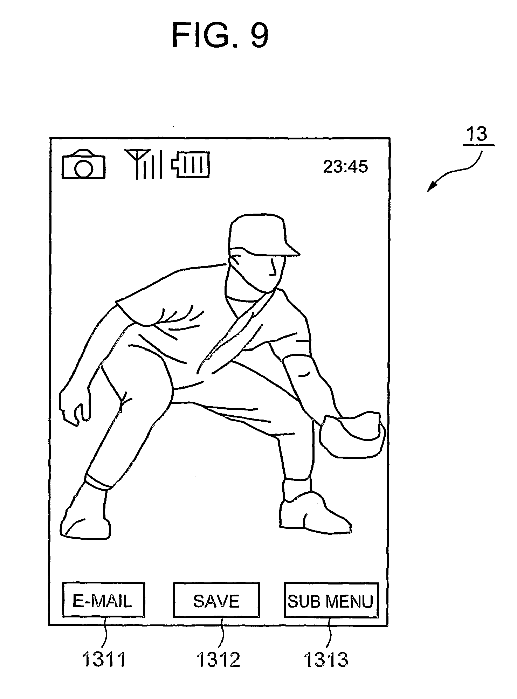

On the other hand, when the determination key 145 is pressed, the picked-up image data is take in (Step S18), and is accumulated into the picked-up image data buffer area 295 (Step S20). Next, the picked-up image data accumulated into the picked-up image data buffer area 295 is compressed to a file (Step S22). This picked-up image data can have resolutions such as 640x480 dots (VGA), 800x600 dots, 1024x768 dots (SVGA, XGA). The picked-up image is then displayed on the display 13 as shown in FIG. 9 (Step S24).

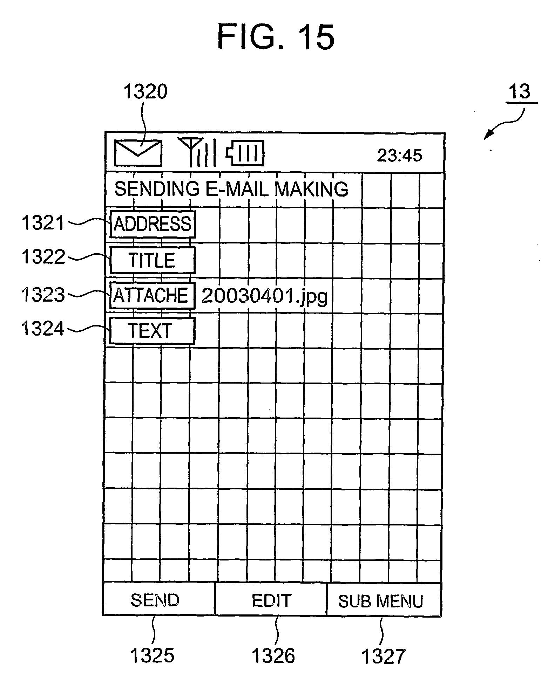

As shown in FIG. 9, an E-mail icon 1311, a saving icon 1312 and a sub menu icon 1313 are displayed on the above preview screen. The E-mail icon 1311 corresponds to the operation of the E-mail key 141. When the operation of the E-mail key 141 is detected, a JPEG file is formed by compressing the image memorized temporarily into the picked-up image data buffer, and is stored into the image file storing area 293. The operation then shifts to the E-mail mode in a state to treat this JPEG image file as attached data (refer to a display example of FIG. 15 to mention latter). The save icon 1312 corresponds to the operation of the determination key 145. When the operation of the determination key 145 is detected, a JPEG file is formed by compressing the image memorized temporarily into the picked-up image data buffer, and is stored into the image file storing area 293. The operation then returns to the monitor display after storing of the JPEG file. The sub menu icon 1313 corresponds to the operation of the function key 143. When the operation of function key 143 is detected, the operation changes to the display of selection menu to select a compression format and a saving location of the image stored temporarily.

Next, the operation judges whether the save key is pressed (Step S26). When the save key is pressed, the file name is added to the image file, which is compressed and filed, on the basis of the time stamp, and the image file then stored into the image memory 23 (Step S28). After that, the operation returns to Step S24, and continues the above-mentioned processing.

On the other hand, when the save key is not pressed, the operation judges whether it attaches the image picked-up at this time to an E-mail to be transmitted by that the E-mail key 141 is pressed (Step S30). When the E-mail key 141 is not pressed, the operation judges whether the sub menu key is pressed (Step S40). When the sub menu key is not pressed, the operation returns to Step S24, and continues the above-mentioned processing. When the sub menu key is pressed, the operation proceeds to the processing of the sub menu (Step S42).

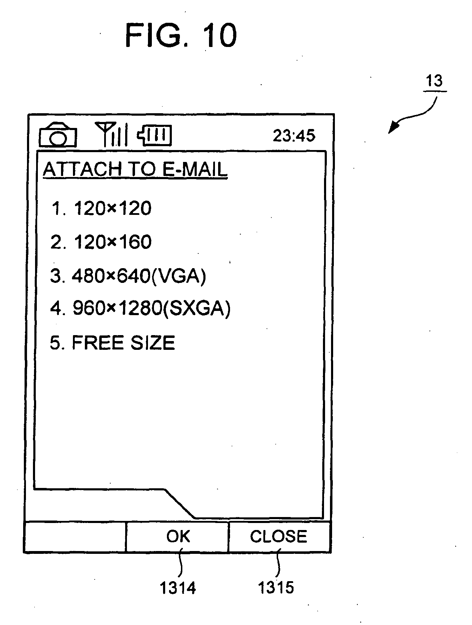

On the other hand, when the E-mail key 141 is pressed, a kind selection screen shown in FIG. 10 is displayed (Step S32). A user selects a desire size from the kind selection screen (Step S34). As shown in FIG. 10, the size of image data attached to the E-mail is indicated in the kind selection screen. In an example of this figure, it is possible to select one size from 120x120 pixels, 120x160 pixels, 480x640 pixels, 960x1280 pixels or free size. In this kind selection screen, an OK icon 1314 and "CLOSE" icon 1315 are displayed. The OK icon 1314 corresponds to the operation of the determination key 145. The operation determines the size of the image attached to the E-mail when the operation of the determination key 145 is detected. The "CLOSE" icon 1315 corresponds to the operation of the function key 143. The operation closes this menu screen in correspondence with the operation detection of the function key 143.

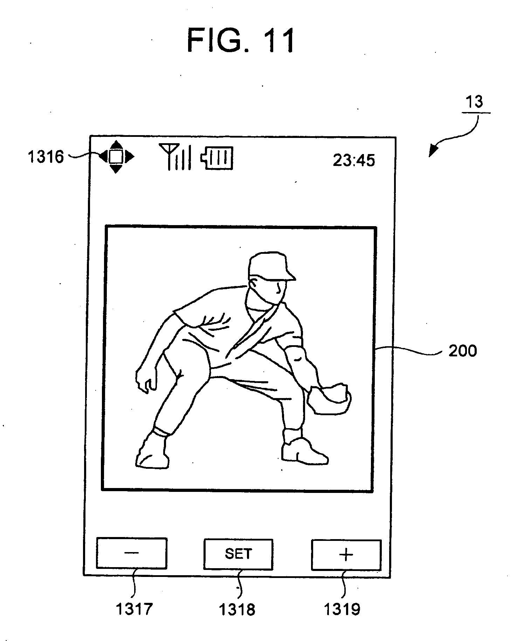

Next, the operation judges whether the OK button is selected (Step S36). When the OK button is selected, as shown in FIG. 11, a clipping screen that the clipping frame 200 overlaid with the preview screen, corresponding to the selected size is displayed (Step S38). In this clipping screen, an arbitrary area having selected size is clipped from the image data. At this time, it is possible to zoom the image in, to zoom it out, or to change the shape of clipping frame 200. In the clipping screen, an icon 1316 which indicates that the mode is a clipping zoom processing mode, a zoom out icon (to carry out the zooming-out display processing of the playback zooming of the picked-up image step by step, whenever detect the operation of the E-mail key 141) 1317, a SET icon (to carry out the zoom fixation in correspondence with the operation detection of the determination key 145) 1318, and a zoom-in icon (to carry out the zooming-in display processing of the playback zooming of the picked-up image step by step, whenever detect the operation of the function key 143) 1319 are displayed.

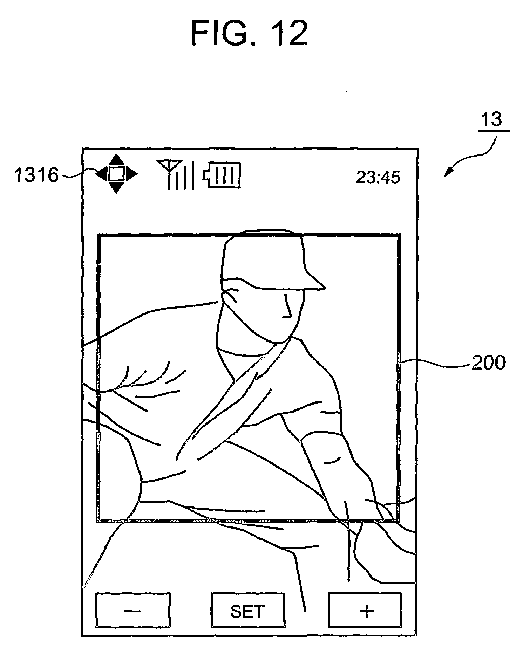

Next, in the clipping screen, the operation judges whether the determination key is selected (Step S42). When the determination key is not selected, the operation judges whether "+" button is selected (Step S44). When "+" button is selected in the clipping screen shown in FIG. 11, the operation zooms the image in as shown in FIG. 12 (Step S46). In the example shown in FIG. 12, it is shown clearly that the current display state is a tendency of zoom-in by enlarging the size of the square part of the clipping zoom icon 1316 and by turning each direction of four triangle arrows outward.

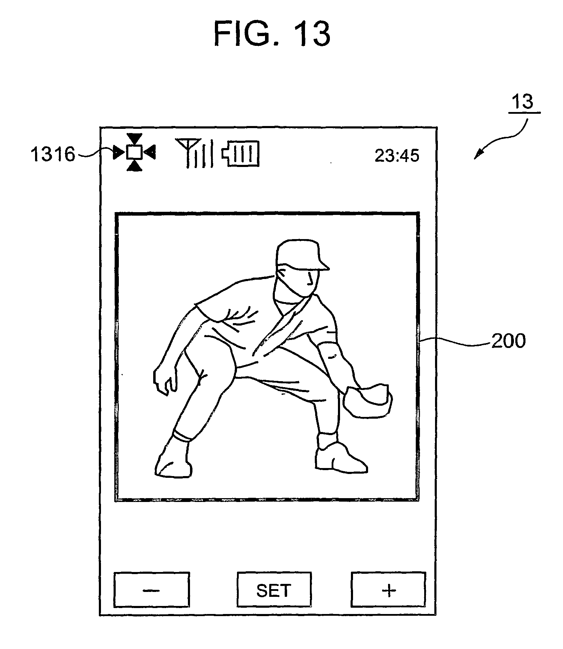

Further, when the "+" button is not selected in the clipping screen, the operation judges whether the "-" button is selected (Step S48). When the "-" button is selected in the clipping screen shown in FIG. 13, the image is zoomed out as shown in FIG. 13 (Step S50). In the example shown in FIG. 13, it is shown clearly that the current display state is a tendency of zoom-out by reducing the size of the square part of the clipping zoom icon 1316 and by turning each direction of four triangle arrows inward.

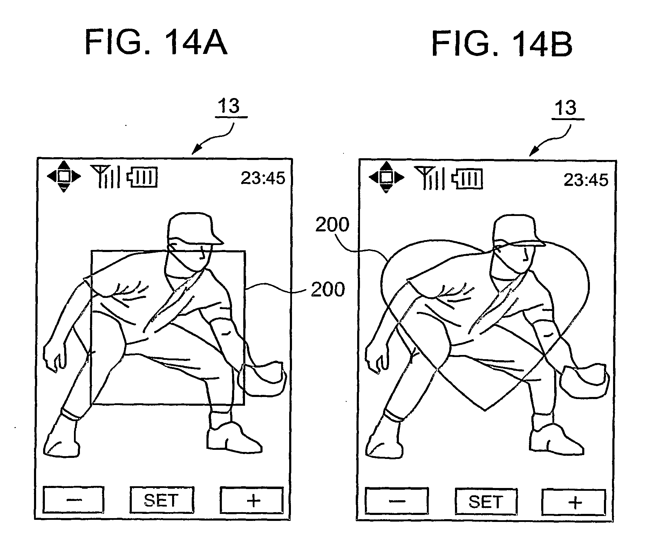

When the "-" button is not also selected in the clipping screen, the operation judges whether the change of clipping frame 200 is detected (Step S52). The change of clipping frame 200 is indicated by using the function key, for example. When the change of clipping frame 200 is detected, the size of clipping frame 200 is changed as shown in FIGs. 14A, 14B. The clipping frame 200 is changed to another clipping frame 200 of different shape sequentially, which is prepared for previously, whenever the function key is operated. In FIG. 14A, the clipping frame 200 of quadrangle in the default is selected, on the other hand, in FIG. 14B, the clipping frame 200 of heart-shaped is selected.

In addition, when the change of clipping frame 200 is not detected in the clipping frame, the operation judges whether the operation of cursor key 146 is detected (Step S56). When the operation of cursor key 146 is then detected, it moves the clipping frame 200 on the clipping screen according to the operation (Step S58).

In this way, when the set button is pressed after having selected an arbitrary part from the picked-up image data with desired size, the selected area with the clipping frame 200 is clipped from the picked-up image data (Step S60). Next, the clipped image is attached to an E-mail (Step S62), the E-mail making screen shown in FIG. 15 is displayed (Step S64). The E-mail address, the title, the attached (file) and the text are displayed in the E-mail making screen. Furthermore, in the E-mail making screen, the E-mail mode icon 1320, the address display column 1321, the title display column 1322, the attached data display column 1323, the text display column 1324, the "transmission" icon 1325, the "editing" icon 1326 and the sub menu icon 1327 are displayed. The "transmission" icon 1325 corresponds to the operation of E-mail key 141. When the operation of E-mail key 141 is detected, the communication processing is carried out for transmitting the E-mail to the address (that is E-mail address). The editing" icon 1326 corresponds to the operation of determination key 145. When the operation of determination key 145 is detected, the operation proceeds to the E-mail editing mode. The sub menu icon 1327 corresponds to the operation of function key 143. When the operation of function key 143 is detected, the menu screen for selecting the character font and color used with the E-mail editing is displayed.

A user inputs the address and the text from the E-mail making screen (Step S66). The operation then judges whether the operation of transmission button is detected (Step S68). When the transmission button is operated, the E-mail that the clipping image is attached is transmitted (Step S70).

In the above-mentioned first embodiment, it is possible to prevent the increase of traffic load, the extending of transfer time, and the increase of charge so that the E-mail that only a part of image data is attached is transmitted, a part of image data being clipped from the image data picked-up with high resolution. It is also possible to attach the desired image data to E-mail, and then to transmit it without any stress so that only the part of image that the user wants to transmit is clipped just after image pick-up. It is also possible to transmit the image by more free clipping and various clipping so that it is possible to change size and shape of the clipping frame 200.

### B. Second embodiment

Next, the second embodiment according to the present invention will be described. In the second embodiment, the image effect may be added to the image data. In addition, it is omitted to explain about the constitution of the cellular phone because it is similar to the first embodiment (FIG. 1).

### B-1. Operation of the second embodiment

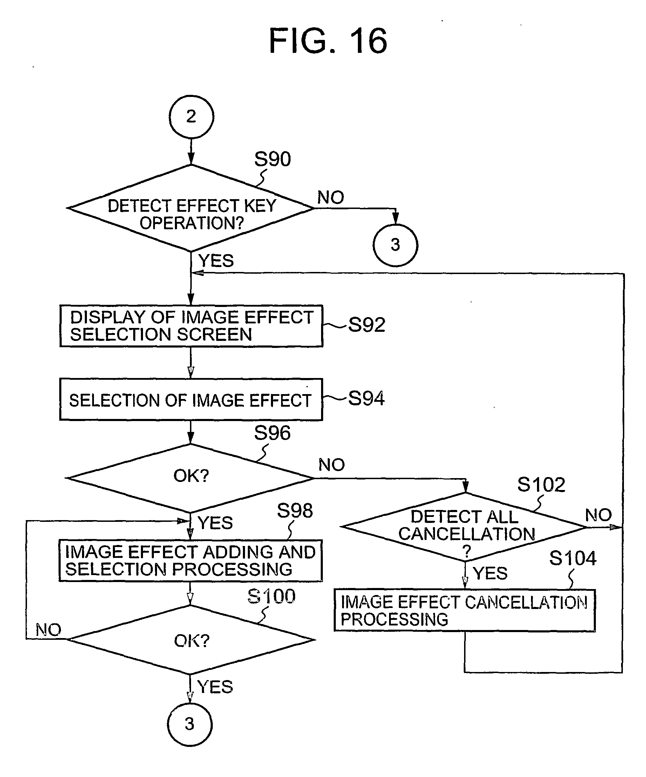

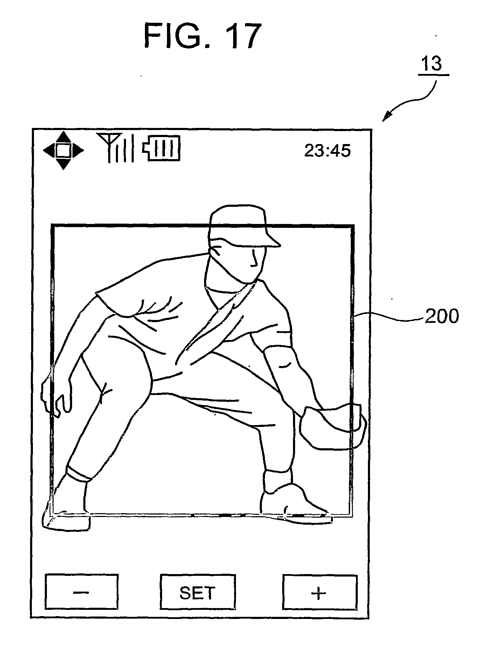

Next, the operation of the cellular phone according to the second embodiment will be described. FIG. 16 is a flowchart for explaining the operation (a part) of the cellular phone according to the second embodiment. FIGs. 17 to 20 are conceptual diagrams showing several display examples of the cellular phone according to the second embodiment.

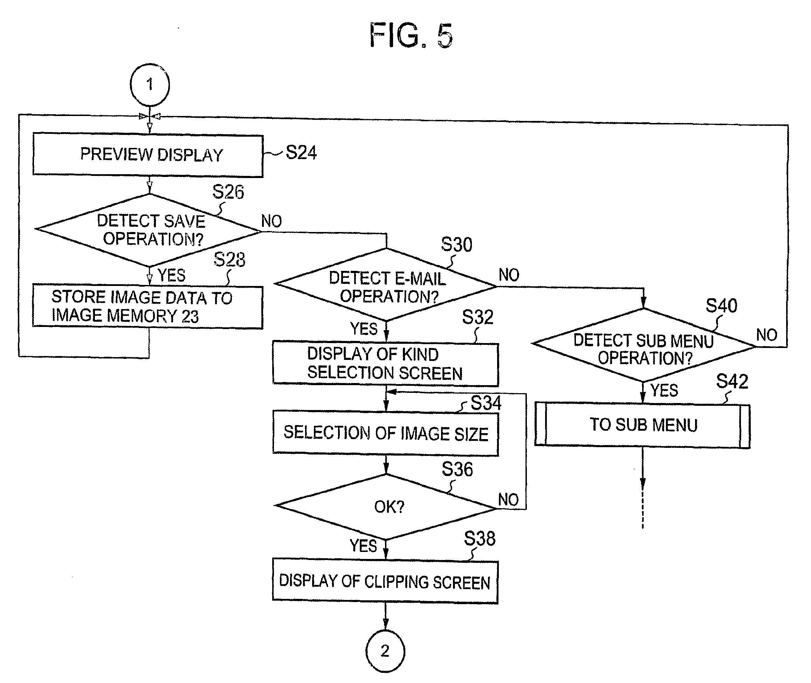

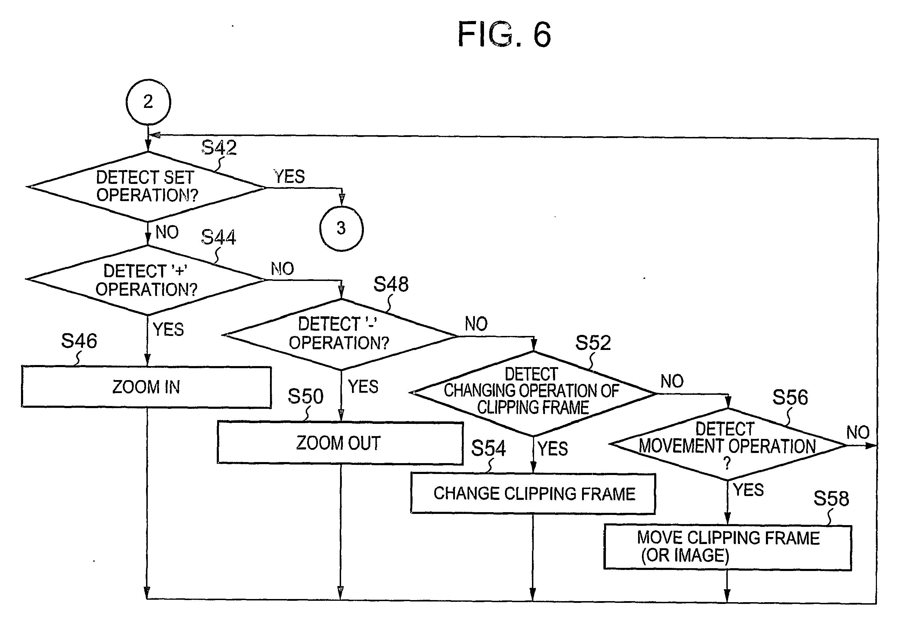

In addition, it is omitted to explain about operations of the image pick-up process, the preview display of picked-up image data, the display of clipping screen, the zoom-in, the zoom-out, the change of clipping frame 200 and the moving of clipping frame 200 in this second embodiment because these are the same as the operation of steps S10 to S22 shown in Fig.4, steps S24 to S38 shown in FIG. 5 and steps S42 to S58 shown in FIG. 6.

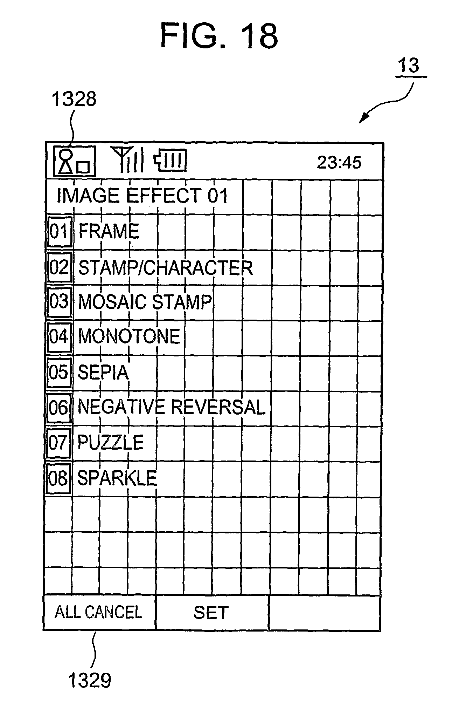

In the second embodiment, the operation judges whether the operation of effect key is detected in the state that the clipping screen shown in FIG. 17 is displayed (Step S90). When the operation of effect key is then detected, an image effect selection screen as shown in FIG. 18 is displayed (Step S92). In this image effect selection screen, various image effects such as (the addition and the selection of) frame, (the addition, the selection and the position indication of) stamp/character, (the addition and the position indication of) mosaic stamp, monotone, sepia, negative reverse, puzzle, twinkle and so on, can be selected. An image editing mode icon 1328 and "all cancellation" icon 1329 are displayed on this image effect selection screen. "All cancellation" icon 1329 corresponds to the operation of E-mail key 141. When the operation of E-mail key 141 is detected, all selected image effects are cancelled, and the operation returns to the state of FIG. 17. A user selects the image effect to wish for by the cursor key 146.

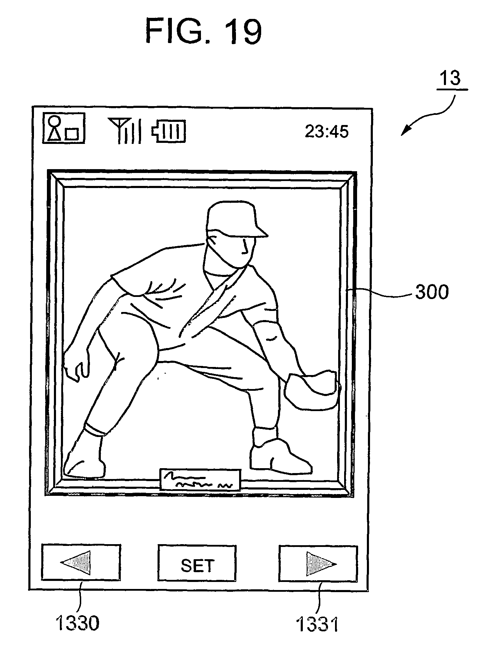

The operation judges whether the operation of OK button is detected (Step S96). When the operation of OK button is detected, the selected image effect is added to the image data, and the image effect is selected (Step S98). In the image effect, such as in the image effect like that the frame is added, it is possible to select a desire frame among a plurality of frames. A display example when the frame is added to the image as image effect is shown in FIG. 19. In this way, it is possible to reflect the image that added the effect as a display example for the inside of the frame.

The backward direction icon 1330 and the forward direction icon 1331 are also display on this screen. The backward direction icon 1330 corresponds to the operation of the E-mail key 141. Every time the operation of the E-mail key 141 is detected, a previous frame is reflected and is displayed (a plurality of frames are provided). The forward direction icon 1331 corresponds to the operation of the function key 143. Every time the operation of the function key 143 is detected, next frame is reflected and is displayed.

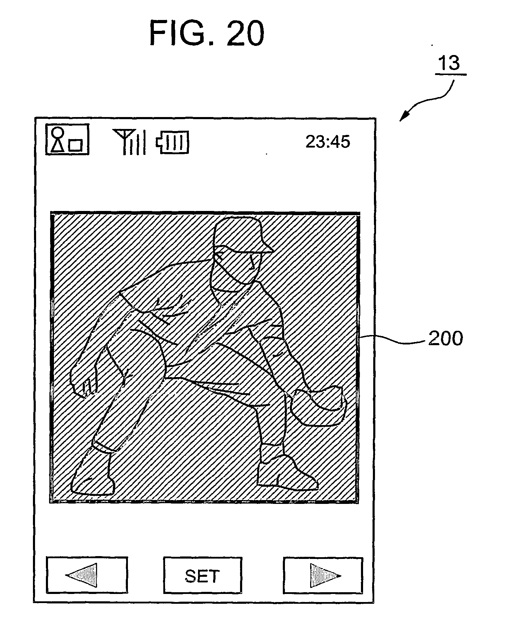

The operation judges whether the operation of the OK button is detected in the state that the desired image effect is added (Step S100). When the OK button is operated, the operation returns to Step S60 of FIG. 6 described in the first embodiment, and carries out the same processing. A display example (Sepia-like effect is reflected and displayed only in the frame) in the case of that sepia is selected is shown in FIG. 20 as image effect.

On the other hand, in the image effect selection screen shown in FIG. 18, when "all cancellation" icon 1329, that is the E-mail key 141 is operated (Step S102), the image effect added until now is cancelled (Step S104).

According to the above-mentioned second embodiment, it is possible to prevent the increase of traffic load, the extending of transfer time, and the increase of charge so that the E-mail that only a part of image data is attached is transmitted, a part of image data being clipped from the image data picked-up with high resolution. Furthermore, it is possible to transmit the image by more free clipping and various clipping so that various image effects such as frame, stamp and mosaic, is added to the image data.

### C. Third embodiment

Next, the third embodiment according to the present invention will be described. In the third embodiment, the image data (the picked-up image data or the image data obtained by other means) which is selected among images stored into the image memory 23 will be a processing target, a part of this image data will be clipped, and will be transmitted the E-mail that the clipped image data is added thereto. In addition, it is omitted to explain about the constitution of the cellular phone because it is similar to the first embodiment (FIG. 1).

### C-1. Operation of the third embodiment

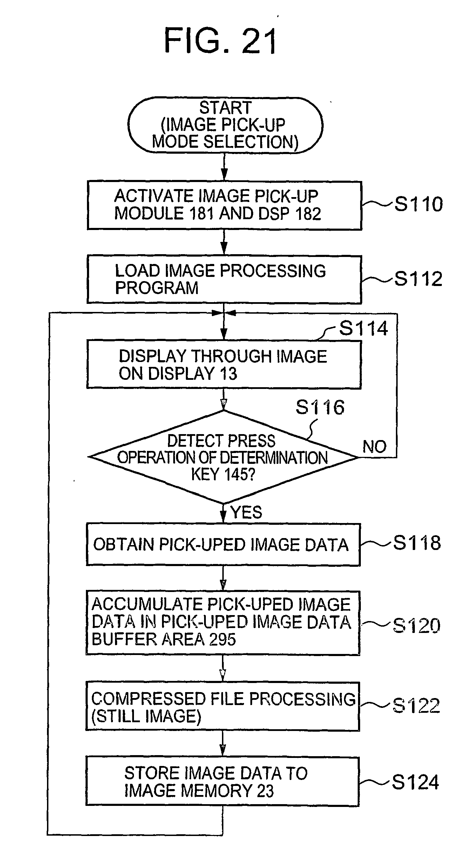

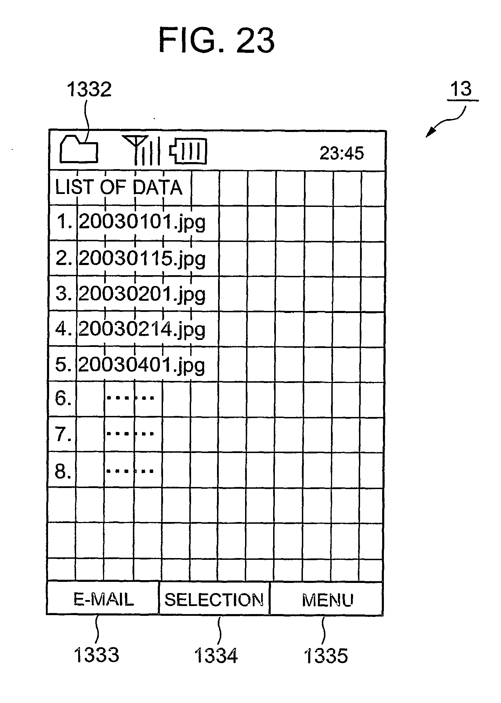

Next, the operation of the cellular phone according to the third embodiment will be described. FIG. 21 is a flowchart for explaining the operation (a part) of the cellular phone according to the third embodiment. FIGs. 23 to 26 are mimetic diagrams showing several display examples of the cellular phone according to the third embodiment.

First, the image pick-up module 181 and the DSP 182 are activated (Step S110). Next, the image processing program is loaded (Step S112), and the through image is displayed on the display 13 as same as above-mentioned first embodiment (Step S114). Next, the operation judges whether the determination key 145 is pressed (Step S116). When the determination key 145 is not pressed, the operation returns to step 114, and continues the display of the through image.

On the other hand, when the determination key 145 is pressed, the picked-up image data is take in (Step S118), and is accumulated into the picked-up image data buffer area 295 (Step S120). Next, the picked-up image data accumulated into the picked-up image data buffer area 295 is compressed to a file (Step S122). This picked-up image data can have resolutions such as 640x480 dots (VGA), 800x600 dots, 1024x768 dots (SVGA, XGA). The compressed image is then stored into the image memory 23 (Step S124).

Next, when the image data list mode (or E-mail transmission mode) is selected, an image data is searched at first (Step S130). The operation then judges whether there is an image data (Step S132), if there is not any image data, an error message is displayed (Step S134).

On the other hand, when there was image data, image data is listed to display as shown in FIG. 23 (Step S136). In addition, it may be the album display with thumbnails. A data folder browsing mode icon 1332, an E-mail mode icon 1333, a selection icon 1334 and a menu icon 1335 are displayed on the data list screen.

The data folder browsing mode icon 1332 indicates a mode to browse various image files stored into the image file storing area 293, and this mode can browse all file obtained by pick-up and by downloading from the network. The E-mail mode icon 1333 corresponds to the operation of the E-mail key 141. When the operation of the E-mail key 141 is detected, the operation proceeds to the E-mail mode.

The selection icon 1334 corresponds to the operation of the determination key 145. When the file name of image file to be selected is selected by detection of the up and down operation of the cursor key 146 (the underline is drawn in selected item), and then the operation of the determination key 145 is detected, the selected image file is decompressed, and is displayed on the display 13. The menu icon 1335 corresponds to the operation of the function key 143. When the operation of the function key 143 is detected, a menu for selecting a display form (for example a multi-screen display etc.) of data folder browsing mode is displayed.

Next, the operation judges whether any image data is selected among listed files (Step S138). When any file is not selected, the listing display is continued.

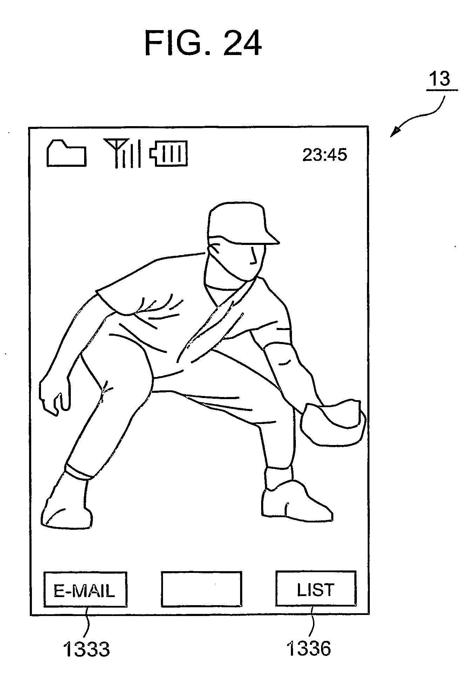

On the other hand, when any image data is selected, the selected image data is previewed as shown in FIG. 24 (Step S140). In this preview screen, the E-mail mode icon 1333 and "list" icon 1336 are displayed. The E-mail mode icon 1333 corresponds to the operation of the E-mail key 141. When the operation of the E-mail key 141 is detected, the operation proceeds to the E-mail mode for transmitting this image file. The "list" icon 1336 corresponds to the operation of the function key 143. When the operation of the function key 143 is detected, the operation returns to the display of FIG. 23.

Next, in the preview display, the operation judges whether the operation of the E-mail button is detected (Step S142). When the operation of the E-mail button is not detected, the operation then judges whether the list button is operated (Step S144). When any operation is not detected, the operation returns to Step S140, and continues the preview display.

On the other hand, when the list button is operated, the operation returns to Step S136 that is returns to the list display of image data shown in FIG. 23. This is the case of other image data is selected.

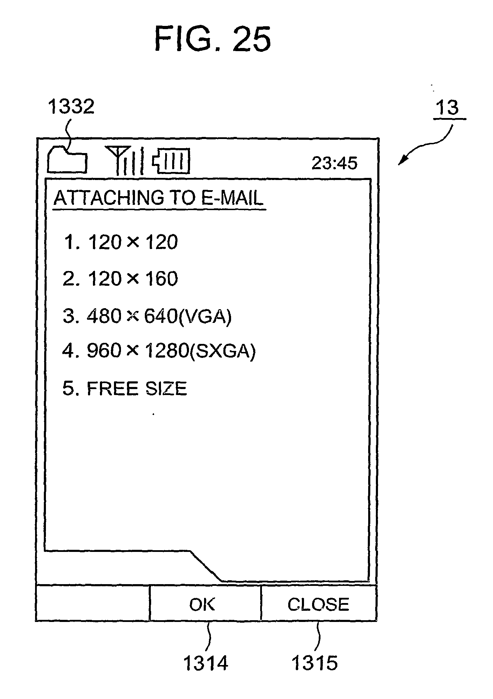

When the operation of the E-mail button is detected in the preview display screen, a kind selection screen shown in FIG. 25 is displayed (Step S146). In the kind selection screen, the size of the image data attached to the E-mail is indicated. A user selects the desire size from the kind selection screen (Step S148).

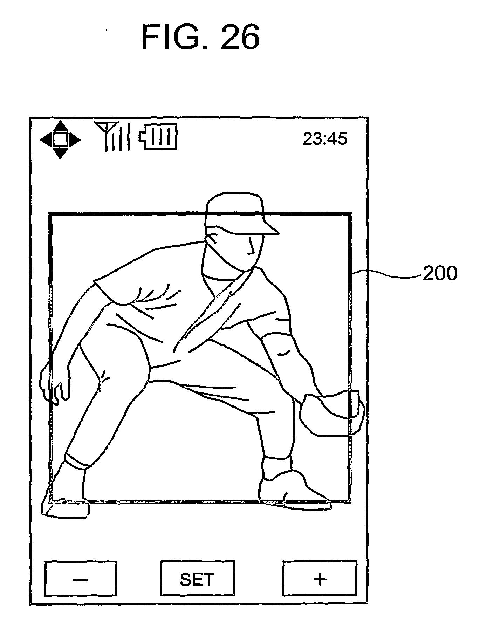

Next, the operation judges whether the OK button is selected (Step S150). When the OK button is selected, as shown in FIG. 26, a clipping screen that the clipping frame 200, which is overlaid with the preview screen, corresponding to the selected size is displayed (Step S152). The operation proceeds to Step S42 shown in FIG. 6 afterwards, as the same as above-mentioned first embodiment. An arbitrary part having a size selected form image data is clipped, and the clipped image data is attached to the E-mail, and is transmitted. In the clipping processing, the zoom-ing in and the zoom out can be performed for the image, and the shape of frame 200 can be changed. Furthermore, image effects may be added to the image as explained in the above-mentioned second embodiment.

According to the third embodiment, it is possible to prevent the increase of traffic load, the extending of transfer time, and the increase of charge, and to transmit more various image data with no stress so that an arbitrary image data is selected among the picked-up image data with high resolution, the downloaded image data or the stored image data, and a part of the selected image data is then clipped, and the clipped image data is attached to the E-mail, and is transmitted.

### D. Fourth embodiment

Next, the fourth embodiment according to the present invention will be described. In the above-mentioned first, second and third embodiments, the clipping frame 200 is displayed, and the zooming in and the zooming out can be carried out for the picked-up image to fit within the frame. Against these embodiments, in this fourth embodiment, a clipping frame (a partial zooming frame) set randomly at will is displayed, and the image of the state that the zooming in.and zooming out is carried out within this frame is displayed in the state that the image is synthesized to an outside image of the partial zooming frame. Furthermore, in this fourth embodiment, when it is determined in a desired zooming state, an image synthesized to the outside image of the partial zooming frame is created. In addition, it is omitted to explain about the constitution of the cellular phone 1 because it is similar to the first embodiment (FIG. 1).

### D-1. Operation of the fourth embodiment

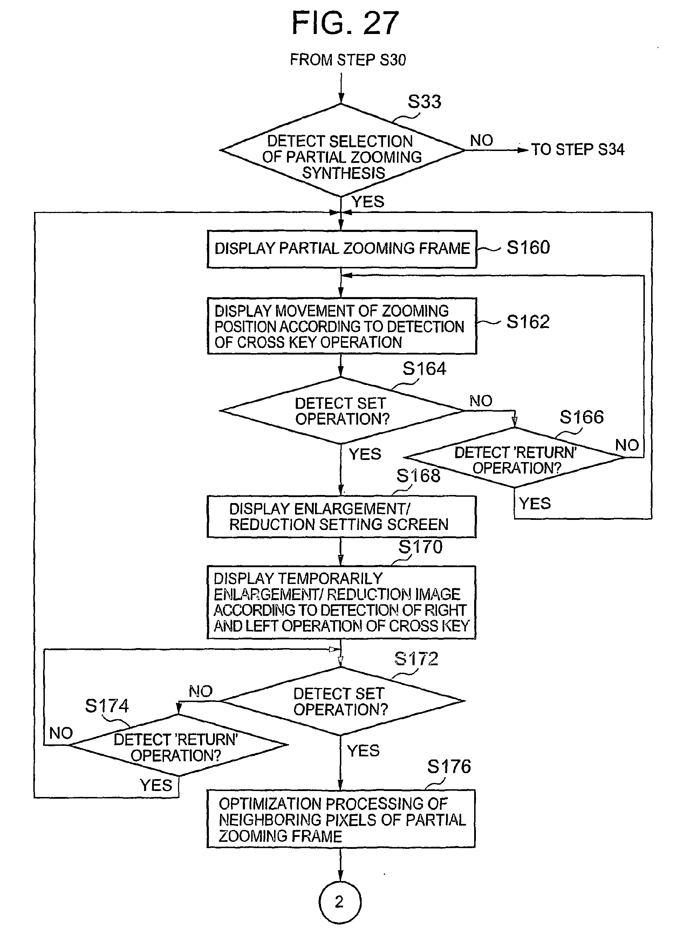

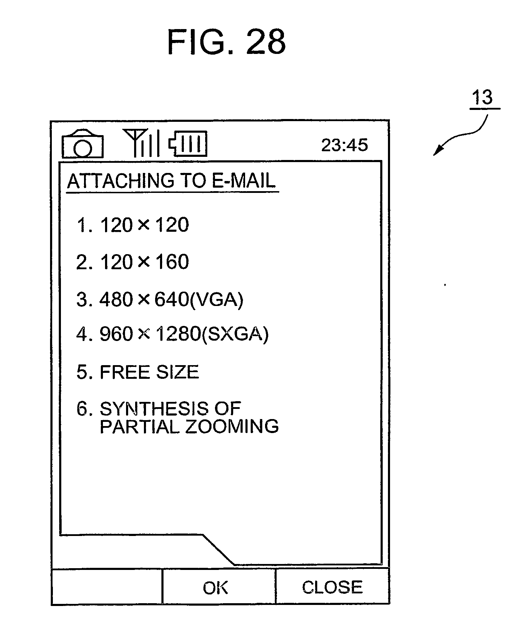

Next, the operation of the cellular phone according to the fourth embodiment will be described. FIG. 27 is a flowchart for explaining the operation (a part) of the cellular phone according to the fourth embodiment. FIGs. 28 to 34 are mimetic diagrams showing several display examples of the cellular phone according to the third embodiment. In addition, only a part peculiar to this fourth embodiment will be described, but the explaining of the common part (steps 51 to S24) will be omitted.

In the preview screen shown in FIG. 9 of Step S24 shown in FIG. 5, the E-mail icon 1311 is pressed, and the indication of "attaching to E-mail" is detected ("YES" in Step S30), a kind selection screen shown in FIG. 28 is displayed. The kind selection screen shown in FIG. 28 is different from the kind selection screen shown in FIG. 10, which is described in the first embodiment, at the point where "partial zooming synthesis" is added to the sixth of the size selection list. The operation judges when the partial zooming synthesis is selected on the kind selection screen shown in FIG. 28 (Step S33). When the partial zooming synthesis is not selected, the operation proceeds to Step S34 shown in FIG. 5.

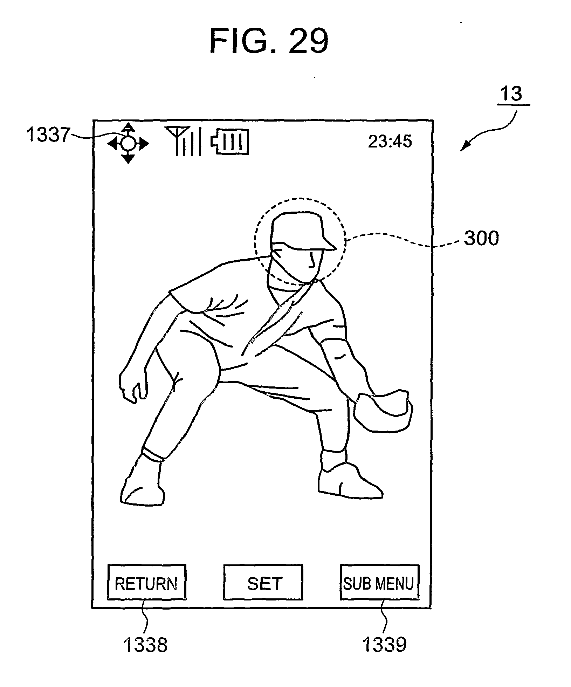

On the other hand, when the partial zooming synthesis is selected, that is the up and down direction operation of the cursor key 146 is detected, and the operation of the determination key 145 is detected in the state that the underline is drawn at "6. Partial zooming synthesis", the operation proceeds to the partial zooming synthesis mode following Step S160 ("YES" of Step S33). In the partial zooming synthesis mode, a partial zooming frame 300 is displayed at first (Step S160). Here, the screen shown in FIG. 29 will be explained. In the screen, a partial zooming position mode icon 1337 and "return" icon (to return the display of FIG. 28 when the operation of the function key 143 is detected) 1338 are displayed.

Next, when the operation of the cross key is detected, the partial zooming frame 300 is moved according to the operation direction of the cross key (S164). Next, the operation judges whether the operation of the determination key 145 is detected (Step S164). When the operation of the determination key 145 is not detected, the operation judges whether the operation of the "return" icon 1388 is detected (Step S166). When either the determination key 145 or return" icon 1388 are not operated, the operation returns to Step S162, and continues the operation to move the partial zooming frame 300 according to the operation direction of the cross key.

On the other hand, when the operation of the "return" icon 1388 is detected, the operation returns to Step S160, and returns in the state that the partial zooming frame 300 is in a default position, that is, the screen shown in FIG. 29, and continues the above-mentioned processing. Furthermore, when the operation of the function key 143 corresponding to the sub menu icon 1339 is detected, the menu for selecting size/shape of the partial zooming frame 300 is displayed.

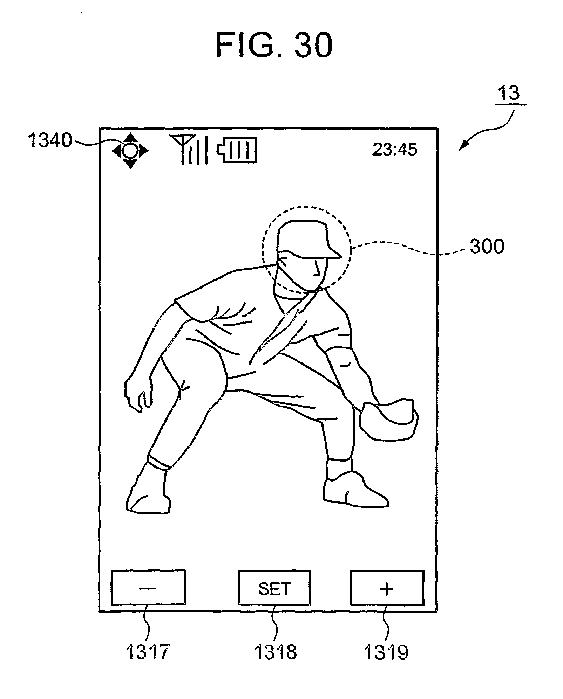

When the operation of the determination key 145 is then detected, an enlargement/reducing set screen shown in FIG. 30 is displayed (Step S168). In this enlargement/reducing set screen, a partial zooming enlargement/reducing set mode icon 1340, a zoom out icon (to carry out the zoom out display processing for a image within the partial zooming frame 300 by enlarging the frame step by step, every time the operation of the E-mail key 141 is detected) 1317, a SET icon (to determine an image to be synthesized in correspondence with the operation detection of the determination key 145) 1318, and a zoom-in icon (to carry out the zoom-in display processing for an image within the partial zooming frame 300 by reducing the frame step by step, every time the operation of the function key 143 is detected) 1319 are displayed. Furthermore, the state in that the partial zooming frame 300 at the face part of baseball player is set is displayed in FIG. 30.

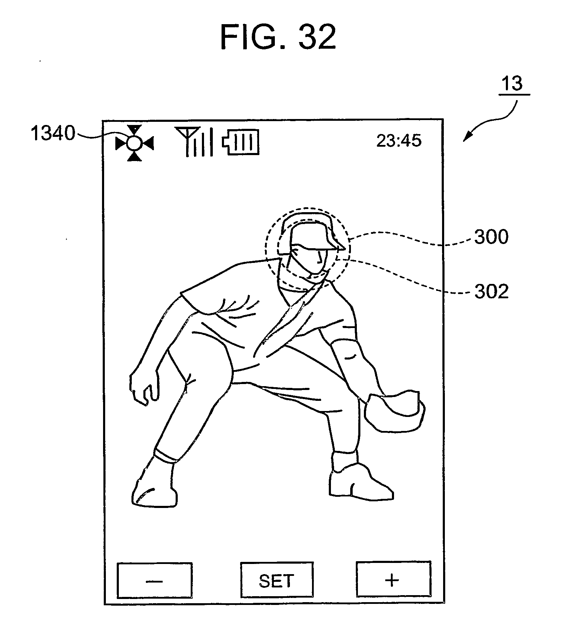

Next, in the above-mentioned enlargement/reducing set screen, when the operation in right and left direction of the cross key, the image is temporarily enlarged or reduced, and is displayed (Step S170). That is to say, when the operation of the function key 143 is detected, the partial zooming frame 300 is displayed with state 301 that the frame is enlarged (the image within the partial zooming frame 300 is also enlarged). On the other hand, when the operation of the E-mail key 141, the partial zooming frame 300 is displayed with state 302 that the frame is reduced (the image within the partial zooming frame 300 is also reduced). Incidentally, the partial zooming frames 300 and 302 are synthesized and displayed in FIG. 32, but in actually the original image is not processed until the synthesis end. This is to be able to return at the time of the cancellation detection in a short time. In other words, as the result when the reducing is carried out, original partial zooming frame 300 is displayed in the state that the original frame is remained so that the enlargement/reducing process is carried out for the image which is copied from the image in the partial frame 300, and is buffered into the work area.

Next, the operation judges whether the operation of the determination key 145 (Step S172). When the operation of the determination key 145 is not detected, the operation then judges whether the operation of the "return" icon 1388 is detected (Step 5174). When either operations of the determination key 145 and the "return" icon 1388 are not detected, the operation returns to Step S170, and continues the above-mentioned processing. On the other hand, when "return" icon 1388 is detected, the operation returns to Step S160, and returns in the state that the partial zooming frame 300 is in a default position, that is, the screen shown in FIG. 29, and continues the above-mentioned processing.

When the operation of the determination key 145 is detected, the optimization processing of neighboring pixels of the partial zooming frame 300 (301, 302) is carried out (Step S176). More concretely, when the determination key 145 is operated after position, shape and area (size) of the partial zooming frame 300 are determined, the partial zooming frame 300 (301, 302) is erased. In this case, it is adjusted as several dots around the border part of the partial zooming frame match a color of the outside pixels thereof so that the malfunction between pixels of boarder part of the partial zooming frame and pixels of the original image occurs. As this optimization processing, for example, the well-known morphing technology can be used.

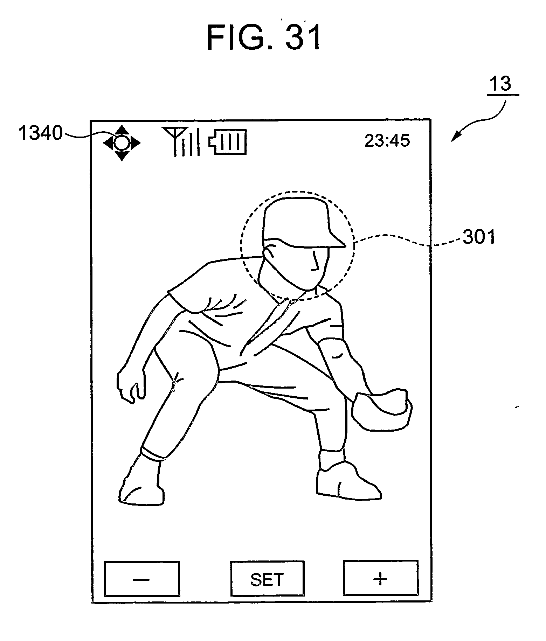

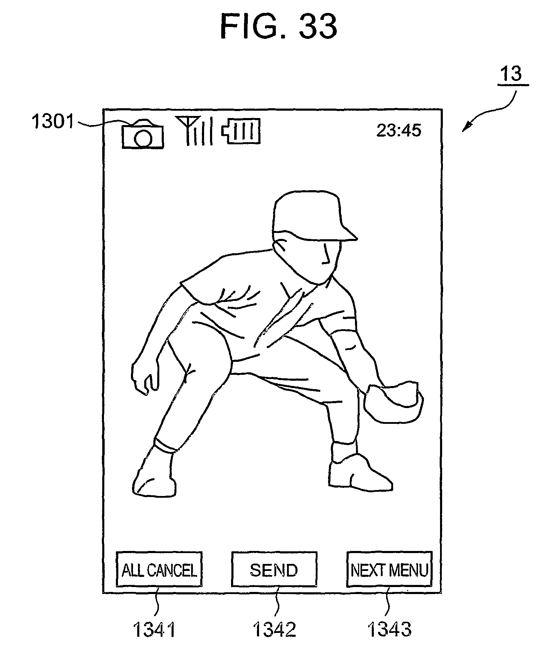

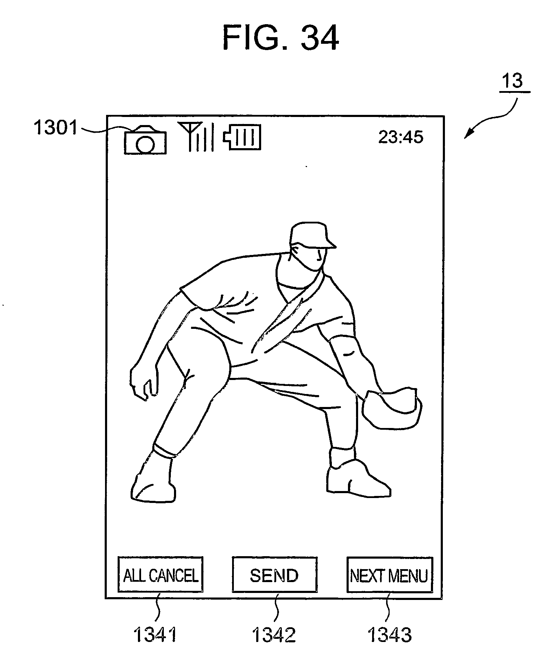

As a result, when the determination is carried out with state 301 that the partial zooming frame 300 is enlarged as shown in FIG. 31, the synthesized image shown in FIG. 33 is displayed. On the other hand, when the determination is carried out with state 302 that the partial zooming frame 300 is reduced, the synthesized image shown in FIG. 34 is displayed.

According to the above-mentioned fourth embodiment, it is possible to transmit the image that more free and various image editing effects are performed so that an image which synthesized the image outside of the partial zooming frame and the image which is zoomed in/zoomed out within the clipping frame (the partial zooming frame) set randomly at will is created. For example, it is very effective for the cases that want to emphasize a part of the image.

Incidentally, in the above-mentioned first to fourth embodiments, it is explained only still image as the image, but a part of movie (or an animation) may be clipped as the same as the still image, and may be attached to E-mail, and may be transmitted. In addition, in the fourth embodiment, the partial zooming frame is moved by the operation of the cross key, and the position of the partial zooming is designated, but the face part of a person may be recognized automatically by image recognition technology, and may be the partial zooming area. Furthermore, in the fourth embodiment, an area within the partial zooming frame is enlarged/reduced, on the contrary, the outside image of the partial zooming frame may be enlarged/reduced, and may be synthesized with the inside image of the partial zooming frame.

## Claims

1. A mobile communications device (1) comprising an image pick-up device (18,181,182) for picking up an image and an electronic mail device (11,20,21) for transmitting the picked-up image in an electronic mail attachment format, said mobile communication device (1) comprising:
a display means (13) adapted to display said image which is picked-up by said image pick-up device (18,181,182);
a first display control means (22) for displaying a predetermined clipping frame overlaid on said picked-up image displayed on said display means to indicate a clipping area of said image;
an image scaling means (141,143) for scaling one of enlargement or reduction of an entire picked-up image displayed on said display means in a step-by-step manner according to a user's operation, while said clipping frame is displayed by said first display control means;
a second display control means (22, 13) for displaying said scaled image with said clipping frame being displayed overlaid thereon on said display means;
a file generation means (22) for generating a clipped image file of said scaled image corresponding to an area within said clipping frame displayed overlaid by said first display control means; and
an electronic mail transmission means (11,20,21) for performing wireless transmission of an electronic mail created using said electronic mail device and having attached said image file.

2. The mobile communications device according to claim 1 further comprising means (145,146) for selecting one kind of clipping frame from among a plurality of kinds of clipping frames by a user's operation according to a partial image size to be clipped.

3. The mobile communications device according to claim 1, further comprising means (146) for arbitrarily moving said clipping frame according to a user's operation in up and down directions and in right and left directions.

4. An image transmission method for transmitting an image in an electronic mail attachment format from a mobile communication device (1) comprising an image pick-up section (18, 181, 182) for picking up an image, a display section (13) for displaying said image picked-up and an electronic mail device (11, 20, 21) for transmitting the picked-up image, said method comprising the following steps:
displaying (S24) on said display section said image picked-up by said image pick-up section;
displaying (S38) a predetermined clipping frame overlaid on said picked-up image displayed on said display section to indicate a clipping area of said image;
scaling (S44,S48) one of enlargement or reduction of an entire picked-up image displayed on said display section in a step-by-step manner according to a user's operation, while said clipping frame is displayed;
displaying (S46,S50) said scaled picked-up image with said clipping frame displayed overlaid thereon on said display section;
generating (S60) a clipped image file of said scaled image corresponding to an area within said clipping frame displayed overlaid thereon; and
performing (S70) wireless transmission of an electronic mail created using said electronic mail device and having attached said image file.

5. A computer-readable storage medium storing a program for controlling a mobile communications device (1) comprising instructions which when executed on the mobile communications device (1) causes it to execute the steps of the method according to claim 4.

## Patentansprüche

1. Mobilkommunikationsvorrichtung (1), die eine Bildaufnahmevorrichtung (18, 181, 182) zum Aufnehmen eines Bildes, sowie eine E-Mail-Vorrichtung (11, 20, 21) zum Übertragen des aufgenommenen Bildes in einem E-Mail-Anhangformat umfasst, wobei die Mobilkommunikationsvorrichtung (1) umfasst:
eine Anzeigeeinrichtung (13), die so eingerichtet ist, dass sie das mit der Bildaufnahmeeinrichtung (18, 181, 182) aufgenommene Bild anzeigt;
eine erste Anzeige-Steuereinrichtung (22), mit der ein vorgegebener Beschneiderahmen über das auf der Anzeigeeinrichtung angezeigte aufgenommene Bild überlagert angezeigt wird, um einen Beschneidebereich des Bildes anzudeuten;
eine Bild-Skaliereinrichtung (141, 143), mit der eine Vergrößerung oder Verkleinerung eines auf der Anzeigeeinrichtung angezeigten aufgenommenen Gesamtbildes entsprechend einer Benutzerbedienung schrittweise skaliert wird, wobei gleichzeitig der Beschneiderahmen durch die erste Anzeige-Steuereinrichtung angezeigt wird;
eine zweite Anzeige-Steuereinrichtung (22, 13), mit der das skalierte Bild mit dem darüber überlagert angezeigten Beschneiderahmen auf der Anzeigeeinrichtung angezeigt wird;
eine Datei-Erzeugungseinrichtung (22), mit der eine beschnittene Bilddatei des skalierten Bildes erzeugt wird, die einem Bereich innerhalb des Beschneiderahmens entspricht, der durch die erste Anzeige-Steuereinrichtung überlagert angezeigt wird; und
eine E-Mail-Übertragungseinrichtung (11, 20, 21), mit der drahtlose Übertragung einer E-Mail durchgeführt wird, die unter Verwendung der E-Mail-Vorrichtung erzeugt wird und an die die Bilddatei angehängt ist.

2. Mobilkommunikationsvorrichtung nach Anspruch 1, die des Weiteren eine Einrichtung (145, 146) umfasst, mit der ein Typ von Beschneiderahmen aus einer Vielzahl von Typen von Beschneiderahmen mittels einer Benutzerbedienung entsprechend einer zu beschneidenden Teilbildgröße ausgewählt wird.

3. Mobilkommunikationsvorrichtung nach Anspruch 1, die des Weiteren eine Einrichtung (146) umfasst, mit der der Beschneiderahmen entsprechend einer Benutzerbedienung beliebig nach oben und nach unten sowie nach rechts und nach links bewegt wird.

4. Bildübertragungsverfahren, mit dem ein Bild in einem E-Mail-Anhangformat von einer Mobilkommunikationsvorrichtung (1) übertragen wird, die einen Bildaufnahmeabschnitt (18, 181, 182) zum Aufnehmen eines Bildes, einen Anzeigeabschnitt (13) zum Anzeigen des aufgenommenen Bildes sowie eine E-Mail-Vorrichtung (11, 20, 21) zum Übertragen des aufgenommenen Bildes umfasst, wobei das Verfahren die folgenden Schritte umfasst:
Anzeigen (S24) des mit dem Bildaufnahmeabschnitt aufgenommenen Bildes auf dem Anzeigeabschnitt;
Anzeigen (S38) eines über das auf dem Anzeigeabschnitt angezeigte aufgenommene Bild überlagerten vorgegebenen Beschneiderahmens, um einen Beschneidebereich des Bildes anzudeuten;
schrittweises Skalieren (S44, S48) einer Vergrößerung oder einer Verkleinerung eines auf dem Anzeigeabschnitt angezeigten aufgenommenen Gesamtbildes entsprechend einer Benutzerbedienung, wobei gleichzeitig der Beschneiderahmen angezeigt wird;
Anzeigen (S46, S50) des skalierten aufgenommenen Bildes mit dem darüber überlagert angezeigten Beschneiderahmen auf dem Anzeigeabschnitt;
Erzeugen (S60) einer beschnittenen Bilddatei des skalierten Bildes, die einem Bereich innerhalb des Beschneiderahmens entspricht, der darüber überlagert angezeigt wird; und
Durchführen (S70) drahtloser Übertragung einer E-Mail, die unter Verwendung der E-Mail-Vorrichtung erzeugt wird und an die die Bilddatei angehängt ist.

5. Computerlesbares Speichermedium, auf dem ein Programm zum Steuern einer Mobilkommunikationsvorrichtung (1) gespeichert ist, das Befehle umfasst, die, wenn sie auf der Mobilkommunikationsvorrichtung (1) ausgeführt werden, diese veranlassen, die Schritte des Verfahrens nach Anspruch 4 auszuführen.

## Revendications

1. Dispositif de communication mobile (1) comprenant un dispositif de capture d'image (18, 181, 182) pour capturer une image et un dispositif de courrier électronique (11, 20, 21) pour transmettre l'image capturée dans un format de pièce jointe de courrier électronique, ledit dispositif de communication mobile (1) comprenant :
un moyen d'affichage (13) conçu pour afficher ladite image qui est capturée par ledit dispositif de capture d'image (18, 181, 182);
un premier moyen de commande d'affichage (22) pour afficher un cadre de découpage prédéfini de manière superposée sur ladite image capturée affichée sur ledit moyen d'affichage pour indiquer une zone de découpage de ladite image ;
un moyen de redimensionnement d'image (141, 143) en vue d'agrandir ou de réduire progressivement, conformément à une action d'un utilisateur, une image capturée entière (141, 143) affichée sur ledit moyen d'affichage pendant que ledit cadre de découpage est affiché par ledit premier moyen de commande d'affichage ;
un second moyen de commande d'affichage (22, 13) pour afficher ladite image redimensionnée, ledit cadre de découpage étant affiché de manière superposée sur celle-ci sur ledit moyen d'affichage ;
un moyen de génération de fichier (22) pour générer un fichier d'image découpée de ladite image redimensionnée correspondant à une zone comprise dans ledit cadre de découpage affiché de manière superposée par ledit premier moyen de commande d'affichage; et
un moyen de transmission de courrier électronique (11, 20, 21) pour effectuer une transmission sans fil d'un courrier électronique créé à l'aide dudit dispositif de courrier électronique et comprenant ledit fichier d'image joint.

2. Dispositif de communication mobile conformément à la revendication 1 comprenant en outre un moyen (145, 146) pour sélectionner une sorte de cadre de découpage parmi plusieurs sortes de cadres de
découpage par une action d'un utilisateur conformément à une taille d'image partielle à découper.

3. Dispositif de communication mobile conformément à la revendication 1 comprenant en outre un moyen (146) pour déplacer de manière arbitraire ledit cadre de découpage conformément à une action d'un utilisateur dans des directions vers le haut et vers le bas et dans des directions vers la droite et vers la gauche.

4. Procédé de transmission d'image pour transmettre une image dans un format de pièce jointe de courrier électronique d'un dispositif de communication mobile (1) comprenant une section de capture d'image (18, 181, 182) pour capturer une image, une section d'affichage (13) pour afficher ladite image capturée et un dispositif de courrier électronique (11, 20, 21) pour transmettre l'image capturée, ledit procédé comprenant :
l'affichage (S24) sur ladite section d'affichage de ladite image capturée par ladite section de capture d'image ;
l'affichage (S38) d'un cadre de découpage prédéfini superposé sur ladite image capturée affichée sur ladite section d'affichage pour indiquer une zone d'affichage de ladite image ;
le redimensionnement (S44, S48) en vue d'agrandir ou de réduire une image capturée entière affichée sur ladite section d'affichage progressivement conformément à une action d'un utilisateur pendant l'affichage dudit cadre de découpage ;
l'affichage (S46, S50) de ladite image redimensionnée, ledit cadre de découpage étant affiché de manière superposée sur celle-ci sur ladite section d'affichage ;
la génération (S60) d'un fichier d'image découpée de ladite image redimensionnée correspondant à une zone comprise dans ledit cadre de découpage affiché de manière superposée sur celle-ci ; et
la mise en oeuvre (S70) d'une transmission sans fil d'un courrier électronique créé à l'aide dudit dispositif de courrier électronique et comprenant ledit fichier d'image joint.

5. Support de stockage lisible par ordinateur stockant un programme pour commander un dispositif de communication mobile (1) comprenant des instructions, lesquelles, lorsqu'elles sont exécutées sur le dispositif de communication mobile (1) amènent ce dernier à exécuter les étapes du procédé conformément à la revendication 4.
